# EUROPÄISCHE PATENTSCHRIFT

(11) **EP 0 298 428 B1**
(45) Veröffentlichungstag und Bekanntmachung des Hinweises auf die Patenterteilung: **15.09.1993**
(21) Anmeldenummer: 88110722.1
(22) Anmeldetag: 05.07.1988
(51) Int. Cl.: F16F 15/12

(54) **Drehschwingungsdämpfer**
Damper for rotational vibrations
Amortisseur des vibrations de rotation

(30) Priorität: 07.07.1987 DE 3722352; 13.05.1988 DE 3816324
(43) Veröffentlichungstag der Anmeldung: 11.01.1989
(73) Patentinhaber: METZELER GIMETALL AG, D-80992 München (DE)
(72) Erfinder: Vohl, Hans-Jürgen, D-5419 Maxsain (DE)
(74) Vertreter: Seibert, Hannelore

(56) Entgegenhaltungen:
- DE-A- 2 710 568
- DE-A- 2 920 125
- DE-A- 3 007 238
- DE-A- 3 516 104

## Beschreibung

Die Erfindung bezieht sich auf einen Drehschwingungsdämpfer für Kraftfahrzeugmotoren, mit einer auf der Kurbelwelle aufgesetzten Nabe und einem über eine Gummispur damit verbundenen Schwungring, an dem mindestens auf einer freien Seite ein aus Blech geformter Keilriementräger und/oder ein Geberrad befestigt sind.

Ein derartiger Drehschwingungsdämpfer ist aus der DE-A-1 166 552 bekannt. Hierbei ist an einen scheibenförmigen Tragkörper eine relativ kompliziert aufgebaute Schwungmasse anvulkanisiert, wobei in diese Schwungmasse der seitliche Flansch eines Keilriementrägers eingeklemmt werden kann.

Darüberhinaus ist aus der DE-A 34 28 894 ein Drehschwingungsdämpfer bekannt, bei dem Keilriementräger und Geberrad gesondert auf den koaxial zur Nabe liegenden Schwungring aufgeschrumpft sind. Wegen der hierbei vorliegenden großen metallischen Massen ist jedoch beim Ausvulkanisieren ein Verziehen der einzelnen Bauteile möglich.

Der vorliegenden Erfindung liegt demgegenüber die Aufgabe zugrunde, einen Drehschwingungsdämpfer zu schaffen, der ohne die Gefahr von Verformungen während der Vulkanisation hergestellt werden kann, und der eine nur geringe Masse bei gleichem Massenträgheitsmoment wie bei herkömmlichen massiven Drehschwingungsdämpfern aufweist.

Zur Lösung dieser Aufgabe ist erfindungsgemäß vorgesehen, daß Nabe und Schwungring je aus einem ebenen, ringscheibenförmigen und anschließend verformten Blechzuschnitt bestehen, die über eine sich im wesentlichen radial erstreckende Gummispur derart miteinander verbunden sind, daß der als ebene Ringscheibe ausgebildete Schwungring im wesentlichen in der Ebene des Nabenflansches verläuft.

Damit werden für den eigentlichen Drehschwingungsgrundkörper nur zwei geometrisch einfache Teile über eine Gummispur miteinander verbunden, wobei diese Verbindung durch Vulkanisation, Kleben, Kalibrieren oder Einschießen erfolgen kann, ohne daß innere Spannungen in den Metallteilen auftreten oder freiwerden, die zu einer Verformung führen können.

Es ist dabei möglich, daß der Schwungring am Innenumfang noch zusätzlich einen sich axial erstreckenden Ansatz aufweist.

Zweckmäßig ist es, wenn der Keilriementräger mit dem Geberrad mit dem Innenradius dieses Geberrades auf dem Außenumfang des Schwungringes aufgesetzt ist.

Es ist aber auch möglich, daß der Keilriementräger sich mit seinem Innenumfang unmittelbar auf dem Außenumfang des axialen Ansatzes des Schwungringes abstützt.

Dabei kann der Keilriementräger auch als Keilrippenriementräger ausgebildet sein.

Mit besonderem Vorteil können ein einziger Grundkörper vorgegebener Größe aus Nabe und Schwungring mit Keilriementrägern und/oder Geberrädern unterschiedlichster Dimensionierung kombiniert werden.

Anhand einer schematischen Zeichnung sind Aufbau und Herstellungsverfahren von Drehschwingungsdämpfern nach der Erfindung näher erläutert. Dabei zeigen:
- Fig. 1: einen Querschnitt durch die obere Hälfte eines Drehschwingungsdämpfers mit ebenem Schwungring und
- Fig. 2: einen Querschnitt durch einen Drehschwingungsdämpfer mit abgewinkeltem Schwungring.

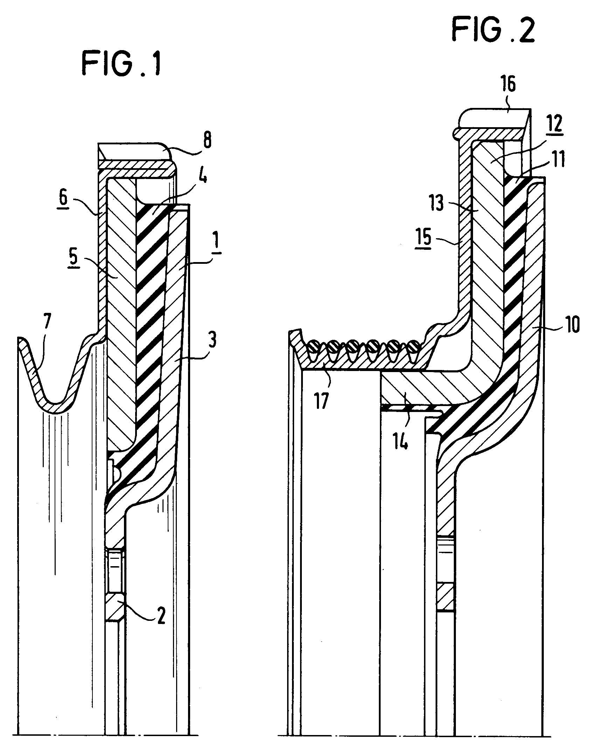

Wie man aus Fig. 1 ersieht, besteht die Nabe 1 des Drehschwingungsdämpfers aus einem Flanschbereich 2, der auf eine nicht näher dargestellte Kurbelwelle aufgesetzt oder an diese angeflanscht ist, sowie einem radial nach außen tellerrandförmig flach abgewinkelten Nabenbereich 3. Auf der Innenseite dieses Nabenbereiches 3 ist nunmehr über eine entsprechend eingestellte Gummischicht 4 möglichst geringer Dicke der Schwungring 5 anvulkanisiert, der aus einer flachen, ebenen Ringscheibe besteht und der bei dem dargestellten Ausführungsbeispiel in der Ebene des Nabenflansches 2 liegt.

Sowohl Nabe 1 als auch Schwungring 5 sind aus ebenen Blechzuschnitten gefertigt, wobei die Nabe 1 anschließend noch entsprechend der gewünschten Form verformt worden ist. Nabe 1 und Schwungring 5 werden dann in eine entsprechene Form eingelegt und sind nach Ausvulkanisation der dazwischen eingespritzten Kautschukmischung 4 fest, jedoch elastisch miteinander verbunden. Durch die einfache geometrische Form von Nabe 1 und Schwungring 5 treten Verformungen aufgrund des Vulkanisationdruckes und der Vulkanisationstemperatur praktisch nicht auf. Dies insbesondere auch deshalb, weil der Drehschwingungsdämpfer flach in die Vulkanisationsform eingelegt werden kann und in dieser flach aufliegt über einen großen Flächenbereich. Darüber hinaus weist ein derartiger Grundkörper eines Drehschwingungsdämpfers trotz seiner geringen Masse das gleiche Massenträgheitsmoment wie ein Drehschwingungsdämpfer massiverer Gestaltung mit integriertem Keilriementräger auf.

Die gleichen Vorteile ergeben sich auch bei anderen geometrischen Gestaltungen sowie bei einer Version mit eingeschossener, geklebter oder kalibrierter Gummischicht. Auf die freie Flanke des Schwungringes 5 ist dann der Blechring 6 befestigt, der einstückig als Blechformteil den Keilriementräger 7 und das Geberrad 8 umfassen kann. Bei dem dargestellten Ausführungsbeispiel ist das Blechformteil 6 mit dem Innenradius des Geberrades 8 direkt auf dem Außenradius des Schwungringes 5 aufgesetzt. Eine Verbindung mit dem Schwungring 5 ist dabei durch Kleben, Schweißen oder mit mechanischen Verbindungselementen in Form von Nieten oder Schrauben möglich.

Eine weitere mögliche Ausgestaltung ist in dem Ausführungsbeispiel nach Fig. 2 gezeigt. Dabei ist auf eine Nabe 10 angenähert gleicher Konfiguration über eine Gummischicht 11 ein Schwungring 12 aufvulkanisiert, der einen rechtwinkligen Querschnitt mit einem radialen, scheibenförmigen Bereich 13 und einem axialen Abschnitt 14 am Innenumfang des scheibenförmigen Bereiches 13 aufweist. Das Blechformteil 15 besteht ebenfalls aus einem Geberrad 16 sowie einem Keilrippenriementräger 17, wobei letzterer sich mit seinem Innenumfang unmittelbar auf dem Außenumfang des axialen Ansatzes 14 des Schwungringes 12 abstützt.

Derartige erfindungsgemäße Drehschwingungsdämpfer haben den Vorteil einer einfachen Herstellung ohne die Gefahr eines Verziehens der Metallteile sowie eines trotz der geringen Masse großen Massenträgheitsmomentes. Ein weiterer wesentlicher Vorteil besteht darin, daß mit einem Grundkörper einheitlicher Dimensionierung durch Kombination mit Keilriementrägern und/oder Geberrädern unterschiedlicher Größe und Bauart eine große Anzahl verschiedener Endprodukte mit Grundkörpern aus nur einem Formwerkzeug hergestellt werden können. Dieses beschriebene Grundprinzip gilt dabei auch für abgewandelte geometrische Gestaltungen von Nabe und Schwungring, soweit diese nur als einfachen Blechzuschnitten gefertigt und die Keilriementräger nachträglich mechanisch am Schwungring befestigt werden.

## Patentansprüche

1. Drehschwingungsdämpfer für Kraftfahrzeugmotoren, mit einer auf der Kurbelwelle aufgesetzten Nabe (1, 10) und einem über eine Gummispur (4, 11) damit verbundenen Schwungring (5, 12), an den mindestens auf einer freien Seite ein aus Blech geformter Keilriementräger (6, 15) und/oder ein Geberrad befestigt sind, dadurch gekennzeichnet, daß Nabe (1, 10) und Schwungring (5, 12) je aus einem ebenen, ringscheibenförmigen und anschließend verformten Blechzuschnitt bestehen, die über eine sich im wesentlichen radial erstreckende Gummispur (4, 11) derart miteinander verbunden sind, daß der als ebene Ringscheibe ausgebildete Schwungring (5) im wesentlichen in der Ebene des Nabenflansches (2) verläuft.

2. Drehschwingungsdämpfer nach Anspruch 1, dadurch gekennzeichnet, daß der Schwungring (12) am Innenumfang noch zusätzlich einen sich axial erstreckenden Ansatz (14) aufweist.

3. Drehschwingungsdämpfer nach Anspruch 1, dadurch gekennzeichnet, daß der Keilriementräger (7, 17) mit dem Geberrad (8, 16) einstückig als Blechformteil (6, 15) ausgebildet und mit dem Geberrad- Innenradius auf dem Außenumfang des Schwungringes (5, 12) aufgesetzt ist.

4. Drehschwingungsdämpfer nach Anspruch 2, dadurch gekennzeichnet, daß der Keilriementräger (17) sich mit seinem Innenumfang unmittelbar auf dem Außenumfang des axialen Ansatzes (14) des Schwungringes (12) abstützt.

5. Drehschwingungsdämpfer nach Anspruch 4, dadurch gekennzeichnet, daß der Keilriementräger als Keilrippenriementräger (17) ausgebildet ist.

6. Drehschwingungsdämpfer nach einem oder mehreren der Ansprüche 1 bis 5, dadurch gekennzeichnet, daß ein einziger Grundkörper aus Nabe (1; 10) und Schwungring (5; 12) vorgegebener Größe mit Keilriementrägern und/oder Geberrädern unterschiedlichster Dimensionierung kombinierbar ist.

## Claims

1. A damper for rotational vibrations for motor vehicle engines, with a hub (1, 10) mounted on the crankshaft and a fly ring (5, 12), which is connected with the hub via a rubber track (4, 11) and on which a V-belt support (6, 15) made of sheet metal and/or a transmitter wheel is/are secured on least on one free side, characterised in that the hub (1, 10) and fly ring (5, 12) are each made of a flat, annular disc-shaped and subsequently deformed sheet metal blank, which are connected with one another via a rubber track (4, 11) extending substantially radially in such a manner that the fly ring (5) constructed as a flat annular disc extends substantially in the plane of the hub flange (2).

2. A damper for rotational vibrations according to claim 1, characterised in that, on its internal circumference, the fly ring (12) additionally comprises an axially extending shoulder (14).

3. A damper for rotational vibrations according to claim 1, characterised in that the V-belt support (7, 17) is integrally formed with the transmitter wheel (8, 16) as a moulded sheet metal part (6, 15) and is mounted with the transmission wheel internal radius on the outer circumference of the fly ring (5, 12).

4. A damper for rotational vibrations according to claim 2, characterised in that the V-belt support (17) is supported with its internal circumference directly on the outer circumference of the axial shoulder (14) of the fly ring (12).

5. A damper for rotational vibrations according to claim 4, characterised in that the V-belt support is constructed as a ribbed belt support (17).

6. A damper for rotational vibrations according to one or more of claims 1 to 5, characterised in that a single base element of hub (1; 10) and fly ring (5; 12) of predetermined size can be combined with V-belt supports and/or transmitter wheels of widely varying dimensions.

## Revendications

1. Amortisseur de vibrations de torsion pour des moteurs de véhicule automobile, comportant un moyeu (1, 10) appliqué sur le vilebrequin et un anneau servant de volant (5, 12) qui y est relié par une couche (4, 11) en caoutchouc et auquel sont fixés au moins sur une face dégagée un support (6, 15) de courroie trapézoïdale et/ou une roue de transmission, caractérisé en ce que le moyeu (1, 10) et l'anneau servant de volant (5, 12) sont constitués chacun d'une pièce annulaire plane découpée dans une tôle puis conformée, qui sont reliées entre elles par une couche (4, 11) en caoutchouc s'étendant sensiblement radialement de manière que l'anneau servant de volant (5) et constitué en disque annulaire plan s'étende sensiblement dans le plan du flasque (2) du moyeu.

2. Amortisseur de vibrations de torsion suivant la revendication 1, caractérisé en ce que l'anneau servant de volant (12) comporte en outre, sur la périphérie intérieure, un prolongement (14) s'étendant axialement.

3. Amortisseur de vibrations de torsion suivant la revendication 1, caractérisé en ce que le support (7, 17) de courroie trapézoïdale est constitué d'une seule pièce avec la roue (8, 16) de transmission et est appliqué par le rayon intérieur de la roue de transmission à la périphérie extérieure de l'anneau servant de volant (5, 12).

4. Amortisseur de vibrations de torsion suivant la revendication 2, caractérisé en ce que le support (7) de courroie trapézoïdale s'appuie, par sa périphérie intérieure, directement sur la périphérie extérieure du prolongement (14) axial de l'anneau servant de volant (12).

5. Amortisseur de vibrations de torsion suivant la revendication 4, caractérisé en ce que le support de courroie trapézoïdale est constitué en support de courroie trapézoïdale (17) à nervures.

6. Amortisseur de vibrations de torsion suivant une ou plusieurs des revendications 1 à 5, caractérisé en ce qu'une pièce de base unique constituée du moyeu (1, 10) et de l'anneau servant de volant (5, 12) d'une dimension prescrite, peut être associée à des supports de courroie trapézoïdale et/ou à des roues de transmission de dimensions différentes.
